# EUROPEAN PATENT APPLICATION

(11) **EP 2 119 907 A1**
(43) Date of publication of application: **18.11.2009**
(21) Application number: 08464008.5
(22) Date of filing: 13.05.2008
(51) Int. Cl.: F03B 1/00, F03B 13/00

(54) **The chain of micro cascade-functioning hydroelectric plants the generator-turbines in cascade**

(71) Applicant: Corbu, Nicolae Gabriel, Hauodari judet Constanta (RO); Castellucca, Luciano, 47014 Meldola, (FO) (IT)
(72) Inventor: Corbu, Nicolae Gabriel, Hauodari judet Constanta (RO); Castellucca, Luciano, 47014 Meldola, (FO) (IT)

(57) **Abstract**

The present invention refers to a constructive solution and to an inovative principle for the execution of mini cascade hydroelectric plants able to ensure the conversion into electric power of the energy of montain streams with a minimum discharge of 3 cubic metres per second and a considerable level difference.
The problem solved by the invention consists in the execution of chain of mini cascade hydroelectric plants which can be mounted at a small distance from one another (minimum 30 metres when the level difference between the mini plants along this distance is optimal).
The chain of micro cascade-functioning hydroelectric plants as per the invention consists of aqueduct sections (6) which start from the intake area fitted with a vertical stainless steel screen and cleaning device upstream.The chain of mini cascade hydroelectric plants for production of electric power by generator-turbines caracterized by the fact that it is formed of aqeduct (6) tubular sections (3) truncated cone sections (4) and a turbine body (5) with generators.

## Description

The present invention refers to a constructive solution and to an innovative principle for the execution of mini cascade hydroelectric plants able to ensure the conversion into electric power of the energy of mountain streams with a minimum discharge of 3 cubic metres per second and a considerable level difference.

By applying this invention, the courses of such steams, fauna and microclimate remain unchanged, and the mini hydroelectric plants and the aqueducts for water transport are mounted on the banks, with the possibility to assemble and disassemble all the subsystems (aqueduct props, aqueduct sections, turbine body, electric generator), which by their design and construction become interchangeable elements.

The system of mini cascade hydroelectric plants will supply electric power in the farthest mountain areas, which can increase the tourist potential of Romania, lighting the famous Carpathian Arc throughout its extent.

An already known mini hydroelectric plant is the one using a concrete dam on the watercourse form which the water is directed through channels towards the generator-turbines by means of mobile weirs.

Another known system consists in a hydraulic installation for water energy conversion provided with articulated weirs placed on concrete foundations, the water being directed towards the turbine via winches.

The disadvantage of such installations is that they are fixed constructions which affect the environment, alter watercourses, require a large amount of water and have low efficiency. ,

The problem solved by the invention consists in the execution of a chain of mini cascade hydroelectric plants which can be mounted at a small distance from one another (minimum 30 metres when the level difference between the mini plants along this distance is optimal), can be easily assembled and disassembled, have low project costs, do not alter the microclimate, allow the passing of persons under aqueducts, give the possibility to mount a large number of turbines when the level difference is adequate and require low water input. Besides, water intake is performed without dams and the used amount of water is discharged in the riverbed when the level difference does not allow the installation of another mini plant and once optimal conditions are met again downstream for the operation of mini plants, the water is caught again and the same principle is repeatedly used until the level difference is no longer optimal.

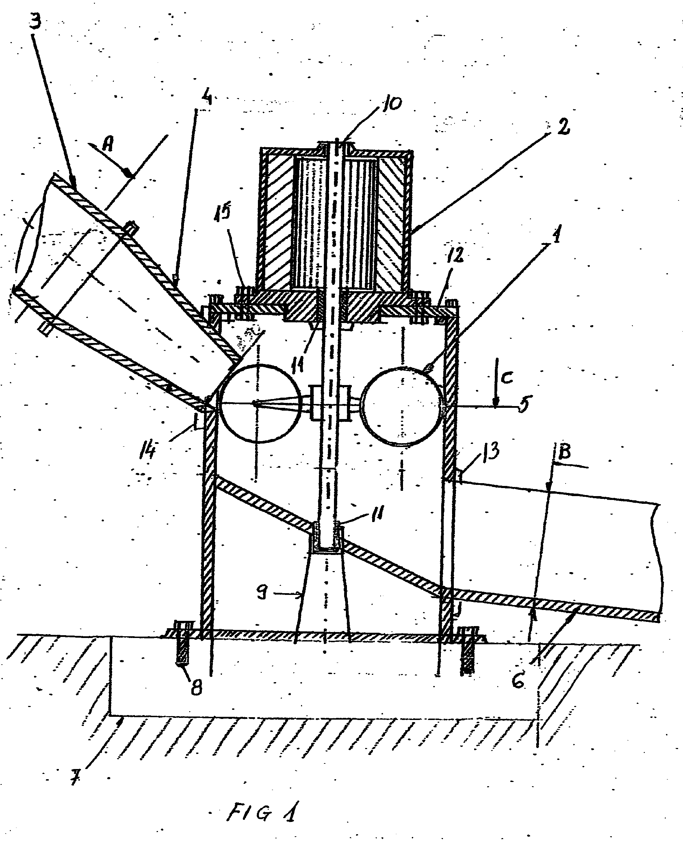

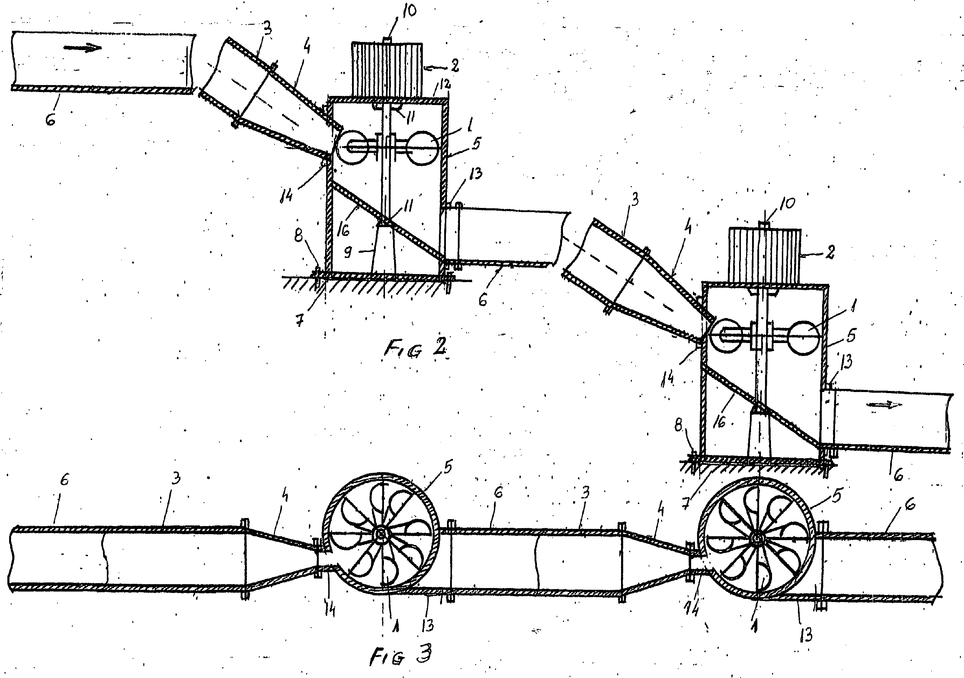

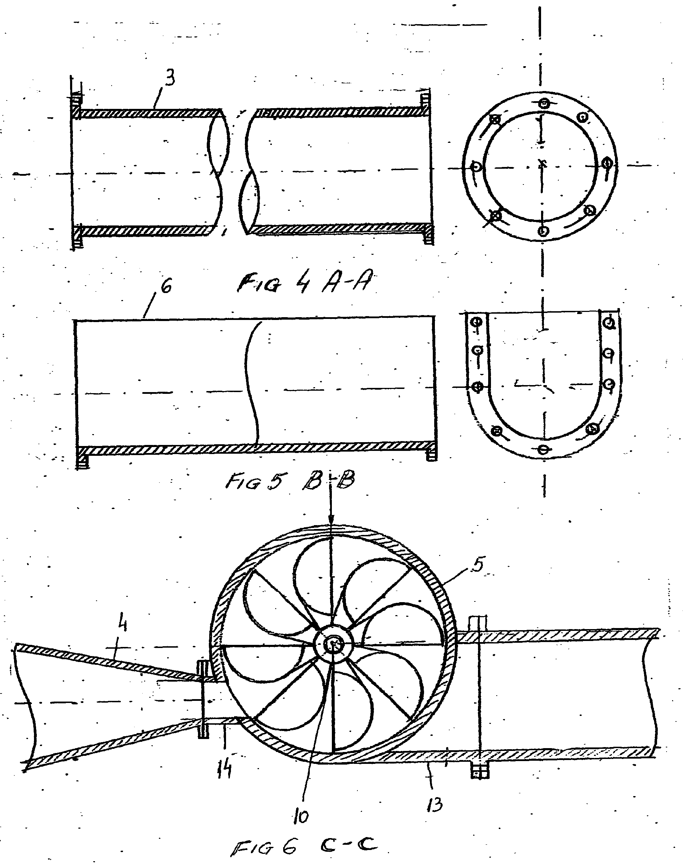

Below you can find an example of execution of the invention related to figures 1, 2, 3, 4, 6, which represent
1) Vertical section of mini hydroelectric plant
2) Cross section representation of mini plants according to principle of cascade functioning
3) Horizontal section representation of mini plants according to the principle of cascade functioning
4) Longitudinal section and lateral view of tubular conduit section
5) Longitudinal section and lateral view of aqueduct section
6) Horizontal section through turbine body at the level thereof.

The chain of micro cascade-functioning hydroelectric plants as per the invention consists of aqueduct sections 6 which start from the intake area fitted with a vertical stainless steel screen and clearing device upstream. This aqueduct made of sections 6 will be mounted on props 17 with different heights having a 2-degree slope up to an optimal height at its end, where the mounting of tubular sections 3 begins still on props 17 with different heights having a 35-degree slope; at the inferior part of the tubular section 3 a truncated cone section 4 is mounted, being meant to increase water velocity and pressure by creating a water jet with enhanced fore which, when reaching the blades of the turbine 1 through the entry nozzle 14, makes it rotate, the rotation mouvement being transmitted by means of the turbine axis 10 to the power generator 2, form which the produced power is carried through cables to a voltage step-up transformer and then it is conveyed to the national system through a meter. Several mini plants can be connected to one transformer.

From the blades of the turbine 1 the water goes by gravity onto a chute 16 located in the turbine body 5 which forces the water to flow into the next aqueduct 6 which will carry the water to the next mini plant.

The aqueduct sections 6, tubular sections 3, turbine body 5, truncated cone section will be made of stainless steel reinforced with glass fibre, fitted at the ends with flanges and joined by screws and sealing gaskets.

At the superior and inferior part, the turbine axis will be fitted with bearings, sealing glands and a support for absorbing weight and vibrations.

## Claims

1. Chain of mini cascade hydroelectric plants for production of electric power by generator-turbines **characterized by** the fact that it is formed of
aqueduct sections, 6, tubular sections 3, truncated cone sections 4 and a turbine body 5 made of stainless steel sheet reinforced with glass fibre and incorprated metallic net, the sections being mounted on props of different heights and under different inclination angles

2. Chain of mini cascade hydroelectric plants for production of electric power by generator-turbines **characterized by** the fact that the whole aqueduct line is carnied out on the banks of mountain streams in a single chain or parallel chains when the banks and the under discharge allow it Generator-turbines are also mounted on stream banks in a large number at a relatively small distance from the watercourse.

3. Chain of micro cascade hydroelectric plants for production of electric power by generator-turbines **characterized by** the fact that the turbine and the turbine body have a special construction placed on a concrete support with an absorbing cushion for vibration reduction, allowing easy disassembly and replacement. All sub-systems are demountable and interchangeable.
